# EUROPEAN PATENT APPLICATION

(11) **EP 2 141 485 A1**
(43) Date of publication of application: **06.01.2010**
(21) Application number: 07742729.2
(22) Date of filing: 01.05.2007
(51) Int. Cl.: G01N 21/75, G01N 21/59, G01N 33/483, G01N 33/579

(54) **APPARATUS FOR MEASURING GELATION AND SAMPLE CELL**

(71) Applicant: Kowa Company, Ltd., Naka-ku Nagoya-shi, Aichi-ken 460-8625 (JP)
(72) Inventor: SHIRASAWA, Yoshiaki, Tokyo 103-8433 (JP)
(74) Representative: Kronthaler, Wolfgang N.K.
(86) International application number: PCT/JP2007/059294
(87) International publication number: WO 2008/139544

(57) **Abstract**

It is an object of the present invention to allow rapid and accurate measurement of the concentration of substances such as endotoxins, β-D glucans and the like that is measured by gelation reactions. In a gelation-reaction measuring apparatus for measuring a target substance in a sample via a gelation reaction, a sample cell for housing a sample containing the target substance to be measured and a solution containing a reagent that gelates is irradiated with irradiation light from a light emitting diode 14. The solution in the sample cell 13 is stirred by a stir bar 25 to generate minute and uniform gel particles, through which the irradiation light passes. The light transmitted through the gel particles generated in the sample cell 13 is detected by a photodiode 22, and the detection output thereof is used to measure the concentration of the substance in the solution by a computer 21 on the basis of the lag time until the amount of transmitted light detected reaches or falls below a set level.

## Description

### Technical Field

The present invention relates to a gelation measuring apparatus for detecting the progression of gelation and thereby measuring the concentration of an measurement object such as endotoxin or β-D glucan in a sample, and relates to a sample cell.

### Background Art

Endotoxins (intracellular toxins) are lipopolysaccharides (LPS) in which a lipid called lipid A among the lipopolysaccharides (macromolecular complexes of phospholipids and polysaccharides) that constitute the cell walls of Gram-negative bacteria is linked with polysaccharide chains via 2-keto-3-deoxyoctonate (KDO). Endotoxins are released only when the cell wall breaks due to cell death or the like. Endotoxins are toxic substances that exert a variety of effects on living organisms, and cause fever or lethal septicemia or shock. Endotoxins are thought to be an inciting factor in DIC (disseminated intravascular coagulation). It is important that pharmaceuticals (injected agents and the like) and medical devices (angiocatheters and the like) are not contaminated with endotoxins (are pyrogen free), and endotoxins must be completely removed from pharmaceuticals (recombinant proteins, DNA used in gene therapy and the like) that are prepared using bacteria.

Speed is needed when confirming the removal of endotoxins or in methods for measuring endotoxins in emergency medicine, not only from the perspective of the number of measurement samples but for the purposes of life-saving medical care.

Levin and Bang in 1964 discovered that endotoxins cause components of the blood-cell extract of horseshoe crabs to coagulate (gelate). The endotoxin-detecting method in which this phenomenon is used is called the limulus test, and in which it is applied that the limulus reagent of the blood-cell extract of horseshoe crabs is caused to gelate by a specimen solution containing endotoxins.

Well-known methods further include gelation methods for measuring the concentration of endotoxins from the dilution factor of a gelating specimen solution, and nephelometric methods for measuring the concentration of endotoxins based on the change in turbidity due to the gelation reaction (Patent Document 1). Other well-known methods include chromogenic synthetic substrate methods in which a chromogenic synthetic substrate (Boc-Leu-Bly-Arg-p-nitroanilide) is added to the coagulation process instead of a coagulation precursor substance (coagulogen) to liberate p-nitroanilide by hydrolysis of the substrate and colorimetrically measure the concentration of endotoxin using the yellow chromogenicity of p-nitroanilide. Also well-known is an apparatus in which a mixed solution of the limulus reagent and a specimen are circulated in a measurement circuit made of a round pipe and the scattering of a laser beam is used to measure the number of scattered particles of 0.5 mm or less resulting from gelation (Patent Document 2).

Measurement technology employing the same gelation reaction is used for measuring not only endotoxins, but also, e.g., β-D glucans.

β-D glucans are polysaccharides that constitute the characteristic cell membranes of fungi. Measuring β-D glucans is effective for, e.g., screening for a wide variety of fungal infections including not only fungi commonly seen in general clinical settings, such as Candida, Aspergillus, and Cryptococcus, but also rare fungi.

The coagulation (gelation) of components of the blood-cell extract of horseshoe crabs due to β-D glucans is also used for measuring β-D glucans. Measurement is performed using the same gelation, nephelometric, and chromogenic synthetic substrate methods as described above.

The methods for measuring endotoxins and β-D glucans have common elements such as, e.g., the use of substantially identical hardware. Gelation or chromogenic reactions selective for endotoxins can be measured by removing the Factor G component from the blood-cell extract of the horseshoe crab, and gelation or chromogenic reactions selective for β-D glucans can be performed by inactivating endotoxins in the sample by pretreatment.
Patent Document 1: JP-A 2004-93536
Patent Document 2: JP-A 2003-322655
Disclosure of Invention
Problems to be Solved

Among the conventional limulus test methods, a gelation method is a method in which a limulus reagent fluid is mixed with a sample and is left at a given temperature to measure the time until the generation of a gel having low fluidity. In the same manner, a nephelometric method is a method in which a limulus reagent fluid is mixed with a sample and is left at a given temperature. In this method, the change in turbidity due to the gelation reaction is detected as the change in the amount of transmitted light to measure the gelation time, i.e., the time from the initiation of the reaction until the amount of transmitted light reaches a set proportion.

The above-mentioned conventional methods are all used in an attempt to detect the gelation reaction itself, and, conventionally, techniques for accelerating the gelation reaction after mixing the limulus reagent and the specimen are not considered at all. Problems are therefore presented in that a long period of approximately 90 minutes is required for the generation of the gel in the reagent/specimen fluid.

The gelation time of the reaction fluid is proportional to the concentration of the substance to be measured. However, taking into account the sensitivity of gelation and nephelometric methods, the time of gelation initiation cannot be accurately detected. Therefore, reaction variables are calculated from the time until the completion of gelation to estimate the gelation time. Gelation and nephelometric methods are therefore not suitable in emergencies or when measuring large numbers of specimens.

In comparison to gelation and nephelometric methods, chromogenic synthetic substrate methods have a short measurement time of 30 minutes, but problems are presented in that false-positive reactions may occur, and the measurement preparations are cumbersome.

It is an object of the present invention to solve the above-mentioned problems and to be able to rapidly and accurately measure the concentration of substances measured via gelation, such as endotoxins, β-D glucans and the like.

Means for Solving the Problems

In order to solve the above problems, the present invention provides a gelation-reaction measuring apparatus for measuring a target substance in a sample via a gelation reaction, comprising a sample cell for housing a sample containing the target substance to be measured and a solution containing a reagent that gelates; stirring means for stirring the solution in the sample cell; irradiation means for irradiating the sample cell with light; photoreceptive means for receiving transmitted light from the gel particles generated in the sample cell, the transmitted light being due to the irradiation light of the irradiation means; and calculating means for measuring a concentration of the substance in the solution on the basis of a lag time until the amount of the transmitted light detected by the photoreceptive means reaches or falls below a set level.

A sample cell used in the gelation-reaction measuring apparatus comprises a container which is sealed by a sealing member and which previously contains therein a reagent that gelates by the target substance to be measured, and a stirring means for stirring the solution of an introduced sample and the reagent.

### Effect of the Invention

According to the above-mentioned configuration, the sample containing the target substance to be measured and a solution containing a gelating reagent are stirred to accelerate the gelation reaction with the substances to be measured such as endotoxins, β-D glucans and the like. This causes the particles (gel particles) resulting from gelation to appear rapidly, thus allowing the concentration of the substance measured using the gelation reaction to be accurately measured in a significantly shorter time than by conventional nephelometric methods.

The sample cell has a configuration comprising a container which is sealed by a sealing member and which previously contains therein a reagent that gelates by the target substance to be measured, and a stirring means for stirring the solution of an introduced sample and the reagent. This allows the possibility of erroneous measurement to be reduced which results from the mixture of the substance to be measured into the sample during transport or handling, thus ensuing the aforementioned highly sensitive measurements.

### Brief Description of Drawings

FIG. 1 is an illustrative view showing the configuration of a measurement apparatus employing the present invention;
FIG. 2A is an illustrative view showing an example of measurement of endotoxin according to the measurement apparatus of FIG. 1;
FIG. 2B is an illustrative view showing an example of measurement of endotoxin according to the measurement apparatus of FIG. 1;
FIG. 2C is an illustrative view showing an example of measurement of endotoxin according to the measurement apparatus of FIG. 1; and
FIG. 3 is an illustrative view showing the configuration of a sample cell of the measurement apparatus of FIG. 1.

Key to Symbols
- 12: Condensing lens
- 13: Sample cell
- 14: Light-emitting diode (LED)
- 15: Magnetic stirrer
- 16: Sample solution
- 17: Light-receiving lens
- 20: A/D Converter
- 21: Computer
- 22: Photodiode
- 23: Display
- 25: Stir bar
- 131: Container
- 132: Sealing member
- 133: Limulus reagent

Best Mode of Carrying Out the Invention

The best mode of carrying out the invention involves embodiments relating to a measurement apparatus in which a limulus reagent is used to detect a gelation reaction and thereby measure the concentration of an endotoxin.

### Embodiment 1

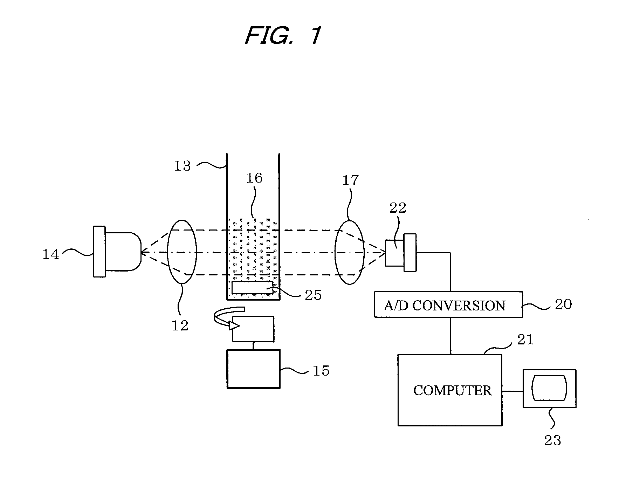

FIG. 1 shows the configuration of a measurement apparatus in which the present invention is employed. In FIG. 1, light emitted from a light-emitting diode 14 is collimated by a condensing lens and directed onto a sample solution 16 within a sample cell 13 in which a sample (specimen) is added to a limulus-reagent solution for mixture therewith.

The sample cell 13 is fabricated from, e.g., glass or another material. The sample cell 13 is shown in an open state in FIG. 1, but different configurations of the sample cell 13 will be described hereinafter.

The sample solution 16 within the sample cell 13 is maintained at a constant temperature of 37 °C by insulating or heating means (not shown) in order to generate gel particles.

In the present embodiment, rotational stirring is performed at an appropriate speed of approximately 1000 rpm by a stir bar 25 and a magnetic stirrer 15 in order to accelerate the gelation reaction in the sample solution 16.

Light transmitted through the gel particles in the sample solution is measured via a light-receiving lens 17 by a photodiode 22 for measuring the intensity of light transmitted.

The measurement results obtained from the photodiode 22 are output as an electrical signal, converted into electrical current and voltage by an amplifier (not shown), and, after amplification, subjected to A/D conversion by an A/D converter 20 and input to a computer 21 that acts as calculating means.

The measurement signal of transmitted light that has been converted into a digital signal is subjected to signal processing by the computer 21, which is configured using, e.g., the hardware of a personal computer.

The computer 21 includes, e.g., a keyboard, mouse, or other operating device; a display 23, printer, or other output device for displaying measurement results; and a network interface for enabling measurement results or information related to the measurements to be input from or output into other devices (devices other than the display 23 are not shown).

The computer 21 controls the rotational speed of the stir bar 25 and the temperature of the aforementioned sample cell 13 or the sample solution 16 therein. For this purpose, encoder sensors, probes, or the like (not shown) are connected to the computer 21 for detecting, e.g., the rotational speed of the stir bar 25 and the temperature of the sample cell 13 or the sample solution 16 therein. Feedback control is performed in the computer 21 so that the rotational speed of the stir bar 25 and the temperature of the sample cell 13 or the sample solution 16 therein can be controlled as desired.

In the above-mentioned measurement, a specimen containing the substance to be measured and a solution containing the reagent that gelates are introduced into the sample cell. Once measurement has commenced, the concentration of the substance to be measured (endotoxin in the examples below) in the sample solution is calculated by the computer 21 from a time TL (lag time) until the measured amount of transmitted light reaches or falls below a set level and the correlation between the TL and the amount (concentration) of the substance to be measured. The results are displayed on the display 23.

The correlation data (or functional relationship data) of the lag time TL until the measured amount of transmitted light reaches or falls below a set level and the concentration of the substance to be measured are measured in advance as shown in the measurement examples below. These data are stored in a memory device (HDD, ROM, or the like) of the computer 21 as table data in which the relation between the lag time TL and the concentration of the substance to be measured is given.

The computer 21 uses the lag time TL that is actually measured and makes reference to this table data to determine the concentration of the substance to be measured. The other types of correlation data as described below can be prepared in the computer 21 as table data.

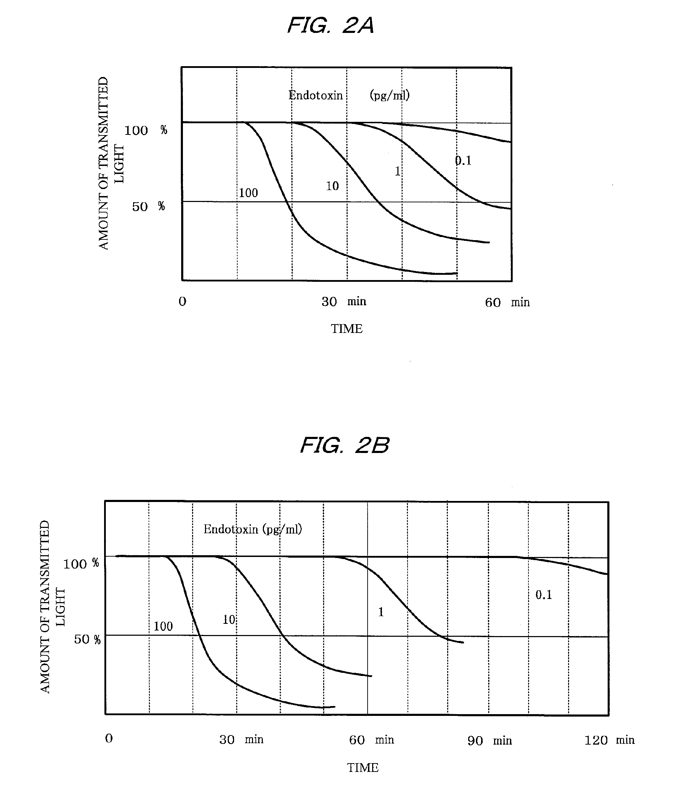

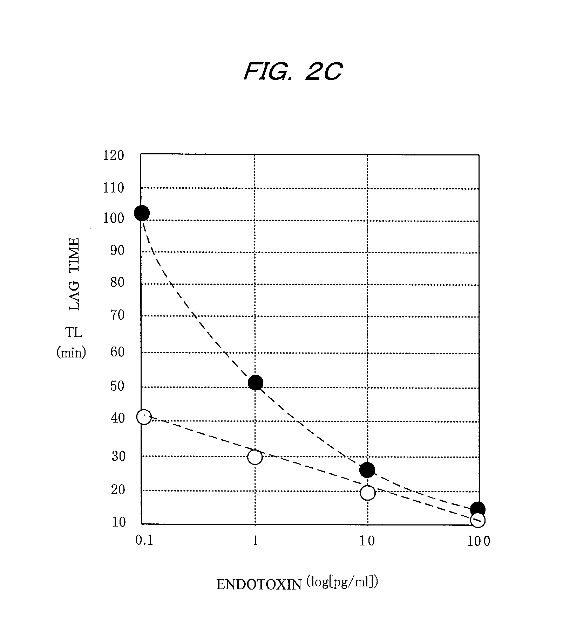

For example, the results obtained from the measurement examples below (FIGS. 2A and 2C) can be stored in the memory device of the computer 21 in the form of table data that acts as correlation data between the lag time TL and the concentration of the substance to be measured (endotoxin in the examples below).

The computer can also be used to calculate a maximum value Vmax of a generation velocity V (V = dXt/dt) of the gel particles generated in the gelation reaction, and to calculate the concentration of the target substance from the correlation between the Vmax and the amount (concentration) of the substance to be measured in the sample solution. The results can be displayed on the display 23.

The concentration of the target substance is also calculated by the computer 21 using the correlation between a maximum amount Xmax of gel particles generated by the gelation reaction and the amount (concentration) of the substance to be measured in the sample solution, and the results can be displayed on the display 23.

Examples of endotoxin measurements using a measurement apparatus of the present invention are given below.

In this case, samples containing known endotoxin concentrations of 0.1 pg/mL, 1 pg/mL, 10 pg/mL, and 100 pg/mL are prepared in advance to compare the measurement of the amount of transmitted light during stirring using the stir bar 25 of the present invention with the conventional measurement thereof (corresponding to the nephelometric method) in which the samples are left standing (FIGS. 2A and 2B).

The correlation (or functional relationship) between the lag times TL until the measured amount of transmitted light reaches or falls below the set level and the concentrations of the substance to be measured can be given (FIG. 2C) from the measurements of the amount of transmitted light (FIGS. 2A and 2B) and can be used as table data in which the relation between the lag time TL and the concentration of the substance to be measured is related so as to allow the measurement of actual samples.

FIG. 2A shows measurement results for the change in the amount of transmitted light measured using the apparatus of FIG. 1 for samples containing 0.1 pg/mL, 1 pg/mL, 10 pg/mL, and 100 pg/mL of endotoxin (indicated on the graph as unit-less numerical values).

In these measurements, a limulus reagent and a sample containing endotoxin at the concentrations listed above were introduced into the sample cell of the apparatus of FIG. 1. Stirring using the stir bar 25 was initiated while measurement of transmitted light was performed by the photodiode 22, the A/D converter 20, and the computer 21.

The computer 21 displays changes in the transmitted light intensity accompanying the gelation reaction over the course of time on the display during the measurement period. The measurement format at this time can be, e.g., a drawing (graph) like FIG. 2A.

The time TL until a transmitted light intensity at or below a set level is measured, the maximum value Vmax of the generation velocity of the gel particles and the maximum amount Xmax of gel particles generated by the gelation reaction are calculated by the computer 21 and shown on the display 23.

As a comparison, FIG. 2B shows measurement results for the change in the amount of transmitted light measured without stirring using the stir bar 25 for samples containing 0.1 pg/mL, 1 pg/mL, 10 pg/mL, and 100 pg/mL of endotoxin (indicated on the graph as unit-less numerical values), the concentration of which is the same as in FIG. 2A.

In these measurements, a limulus reagent and a sample containing endotoxin at the concentrations listed above were introduced into the sample cell of the apparatus of FIG. 1. No stirring using the stir bar 25 was initiated while transmitted light was measured by the photodiode 22, the A/D converter 20, and the computer 21.

In other words, the measurements of FIG. 2B correspond substantially to conventional nephelometric methods for measuring the amount of transmitted light without stirring.

As is seen from a comparison of FIGS. 2A and 2B, measurements involving stirring using the stir bar 25 (FIG. 2A) result in shorter lag times until the amount of transmitted light falls below 100% than in the case of measurements without stirring using the stir bar 25 (FIG. 2B).

FIG. 2C shows the results for the concentration (pg/mL) of endotoxin measured and the lag time TL until the measured amount of transmitted light falls below a set level in the measurements of FIG. 2A and 2B.

The time until the amount of transmitted light (transmittance) breaks 100% has been adopted as the lag time TL in this case. The graph plot of white circles shows the lag times TL when stirring as in the present invention (FIG. 2A), and the graph plot of black circles shows the conventional lag times TL without stirring (FIG. 2B).

Nephelometric methods of the prior art in which the sample solution is not stirred require more time for the measurement of endotoxins, as is clear from FIG. 2C.

When measuring endotoxins having a concentration of, e.g., 0.1 pg/mL, it can be seen that the lag time for the nephelometric method is approximately 100 minutes, but the lag time measured using the measurement apparatus of the present invention is 35 minutes. The present measurement apparatus employs the stirring for the endotoxin measurement. Therefore, it can be seen that the measurement time can be shortened by approximately 1 hour for a specimen at this concentration level.

The curves plotted in FIG. 2C, i.e., the data (lag time TL, concentration of the target substance) on the curve that were plotted with white circles for measurements while stirring according to the present invention (FIG. 2A), can be stored in the storage device of the computer 21 as table data in which the relation between the lag time TL and the concentration of the substance to be measured is given.

If a data table is prepared using such data (lag time TL, concentration of the target substance), measurement can be performed on a specimen in which the concentration of the target substance is unknown. The lag time TL until the measured amount of transmitted light reaches or falls below a set level is determined, and reference is made to the data table using this lag time TL. This allows the concentration of the target substance in the specimen to be measured.

As shown above, the configuration of FIG. 1; i.e., a configuration in which the amount of transmitted light is measured with a sample solution containing a substance to be measured being stirred accelerates the gelation reaction of the endotoxins, β-D glucans, and the like. The particles (gel particles) resulting from gelation thereby appear promptly, and the concentration of the substance measured using the gelation reaction can be accurately measured in a significantly shorter time than by conventional nephelometric methods.

The description was made with reference to the embodiment in which both the limulus reagent and the sample were introduced in the sample cell 13.

However, it would be necessary that the structure surrounding the sample cell must be designed to be endotoxin-free in order to more accurately measure endotoxins.

Specifically, endotoxins are present in significant amounts in normal environments, and it is possible that some amount of endotoxin makes the sample cell impure during a reagent-manufacturing step or during the measurement operation.

The prior art is endotoxin-free at such a level that one end of the sample cell 13 is open or is able to be opened and closed in order to allow input of both the limulus reagent and the sample. However, the measurement apparatus of the present invention may positively detect endotoxin even for an endotoxin-free sample due to influences of invading endotoxin.

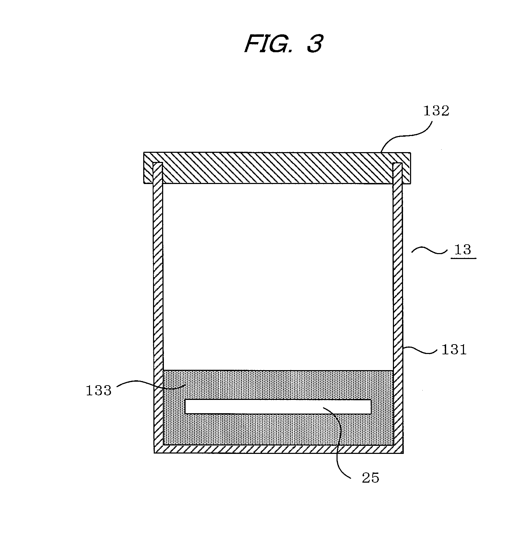

Accordingly, the sample cell 13 can be constructed so that the stir bar 25 and a necessary amount of a limulus reagent 133 are housed in a container 131 composed of resin, glass, or the like and the upper part thereof is sealed with a sealing member 132, as shown in FIG. 3.

The sealing member 132 may be in any desired form, but it shall be apparent that a member is used which has specifications such that endotoxin does not invade during the process of transport and handling.

The introduction of a measurement sample (specimen) into the sample cell 13 may be performed such that an injection needle or the like is used to puncture the sealing member 132 and perform an injection. Alternatively, in order to facilitate the introduction of the measurement sample (specimen), the sealing specifications of the sealing member 132 may also be set such that the interior of the sample cell 13 is maintained at a set negative pressure relative to atmospheric pressure.

It shall be apparent that the sample cell 13 as shown in FIG. 3 must be assembled in a manufacturing environment that achieves a set endotoxin-free level.

The sample cell 13 configured as shown in FIG. 3 can be supplied to a user in the form of an accessory to the measurement apparatus shown in FIGS. 1 or e.g., as a measurement kit constituting part of a product family. A measurement environment meeting a predetermined endotoxin-free level can be readily created in such instances, and highly precise measurement results can be reliably achieved.

FIG. 3 shows the configuration of a sample cell for a single specimen (sample), but a plurality of similar structures is integrated to provide a product that allows multiple specimens (samples) to be measured simultaneously and easily. It shall be apparent that a plurality of measurement apparatuses as shown in FIG. 1 must also be provided corresponding to the number of sample cells.

Endotoxins were assumed as the substance to be measured in the above-mentioned embodiment, but it shall be apparent that the same measurement hardware can be applied to similar measurements for detecting the progression of gelation phenomena for β-D glucans and the like using the same or similar limulus reagents.

Industrial Applicability

The present invention can be carried out in a variety of measurement apparatuses for detecting the progression of gelation phenomena and thereby measuring the concentration of measurement objects such as endotoxins or β-D glucans in a sample using a limulus reagent.

## Claims

1. A gelation-reaction measuring apparatus for measuring a target substance in a sample via a gelation reaction, comprising:
a sample cell for housing a sample containing the target substance to be measured and a solution containing a reagent that gelates;
stirring means for stirring the solution in the sample cell;
irradiation means for irradiating the sample cell with light;
photoreceptive means for receiving transmitted light from the gel particles generated in the sample cell, the transmitted light being due to the irradiation light of the irradiation means; and
calculating means for measuring a concentration of the substance in the solution on the basis of a lag time until the amount of the transmitted light detected by the photoreceptive means reaches or falls below a set level.

2. A gelation-reaction measuring apparatus according to claim 1, wherein,
sample solutions containing the substance to be measured at various known concentrations and the reagent are previously introduced into the sample cell;
the lag times until the amount of the transmitted light detected by the photoreceptive means reaches or falls below a set level are measured;
a data table for storing functional relationship data of the obtained lag times and the concentrations is prepared in a memory device of the calculating means; and
when measuring a sample in which the concentration of the target substance is unknown, the calculating means uses the lag time until the amount of the transmitted light detected by the photoreceptive means reaches or falls below a set level and makes reference to the data table, thereby measuring the concentration of the substance in the solution.

3. A sample cell used in the gelation-reaction measuring apparatus according to claim 1 or 2, comprising a container which is sealed by a sealing member and which previously contains therein a reagent that gelates by the target substance to be measured, and a stirring means for stirring the solution of an introduced sample and the reagent.

4. A sample cell according to claim 3, wherein the reagent and the stirring means are sealed in an environment in which the substance to be measured is present at or below a predetermined level.
